(19) Europäisches Patentamt
European Patent Office
Office européen des brevets

(11) **EP 2 010 937 B1**

(12) **FASCICULE DE BREVET EUROPEEN**

(45) Date de publication et mention
de la délivrance du brevet:
**13.02.2013 Bulletin 2013/07**

(21) Numéro de dépôt: **07728575.7**

(22) Date de dépôt: **26.04.2007**

(51) Int Cl.:
***G01S 15/89*** *(2006.01)*

(86) Numéro de dépôt international:
**PCT/EP2007/054120**

(87) Numéro de publication internationale:
**WO 2007/122267 (01.11.2007 Gazette 2007/44)**

(54) **PROCEDE POUR OPTIMISER L'ALIMENTATION D'UNE ANTENNE LINEAIRE D'EMISSION REMORQUEE POUR EMETTRE EN MODE OMNIDIRECTIONNEL**

VERFAHREN ZUM OPTIMIEREN DER STROMVERSORGUNG FÜR EINE LINEAR SENDENDE ANTENNE, DIE SO GEZOGEN WIRD, DASS SIE IM OMNIDIREKTIONALEN MODUS SENDET

METHOD FOR OPTIMISING THE POWER SUPPLY TO A LINEAR TRANSMITTING AERIAL TOWED SO AS TO TRANSMIT IN OMNIDIRECTIONAL MODE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.04.2006 FR 0603729**

(43) Date de publication de la demande:
**07.01.2009 Bulletin 2009/02**

(73) Titulaire: **Thales**
**92200 Neuilly Sur Seine (FR)**

(72) Inventeurs:
• **DOISY, Yves**
**06130 Grasse Plascassier (FR)**

• **RAILLON, Louis**
**06800 Cagnes Sur Mer (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-92/18878        WO-A-02/079806**
**DE-C1- 19 743 096     GB-A- 1 486 068**

EP 2 010 937 B1

**Description**

DOMAINE DE L'INVENTION

La présente invention est relative au domaine des systèmes d'émission pour sonar actif remorqué très basse fréquence. Ces sonars sont utilisés par des bâtiments de surface pour la détection sous-marine, et ont pour fonction d'assurer la protection du bâtiment contre des menaces sous-marines. L'invention se rapporte à un procédé permettant d'assurer une émission omnidirectionnelle à partir d'une antenne linéaire comportant une pluralité de projecteurs élémentaires en optimisant l'alimentation des projecteurs et les signaux à émettre.

CONTEXTE DE L'INVENTION - ART ANTERIEUR

Afin d'assurer la protection du bâtiment porteur, le sonar d'un bâtiment de surface doit pouvoir détecter les menaces, des engins sous-marins principalement, à grande distance et dans toutes les directions de l'espace. Cette détection doit en outre pouvoir être réalisée dans des conditions environnementales variées.

Les exigences de portées de détection conduisent à utiliser des systèmes sonars fonctionnant à des fréquences basses, correspondant à de grandes longueurs d'onde, de l'ordre du mètre.

Pour obtenir une directivité suffisante, les dimensions des antennes de réception sont couramment de plusieurs dizaines de mètres. Par ailleurs, la nature des profils de célérité du son dans l'eau nécessite, dans certaines conditions, de pouvoir immerger les antennes d'émission et de réception à une profondeur optimisée pour la détection. C'est en particulier le cas lors des périodes estivales pendant lesquelles les gradients de célérité du son dans les zones proches de la surface sont fortement négatifs.

La combinaison de ces exigences relatives à la fréquence de travail, aux dimensions nécessaires de l'antenne de réception et à la capacité de choisir la profondeur d'immersion du système, conduit, sur les systèmes existants ou en cours de développement, à utiliser pour la réception des antennes linéaires remorquées enroulables, dont le déploiement et la récupération sont relativement aisés. La fonction d'émission est, quant à elle réalisée, à partir d'une autre antenne, spécifique, intégrée dans un corps remorqué. Cette antenne d'émission peut être non directive, et permettre de réaliser une émission omni directionnelle, ou faiblement directive et permettre par exemple de réaliser une émission suivant deux à quatre secteurs de façon à couvrir l'horizon..

Dans tous les cas, l'utilisation de cette antenne spécifique de l'émission est génératrice de contraintes diverses. Un premier type de contraintes touche la mise en oeuvre du système et en particulier les opérations de déploiement et récupération du corps remorqué contenant l'antenne d'émission, opérations qui nécessitent un système de mise à l'eau et récupération spécifique. Un autre type de contrainte est constitué par la traînée associée au corps remorqué contenant l'antenne d'émission, traînée dont l'intensité dimensionne le câble de remorquage et par conséquent le poids du système.

Une solution pour éliminer ces contraintes consiste à réaliser une antenne d'émission également linéaire, enroulable, et à configurer cette antenne pour la rendre apte à insonifier tout l'espace de manière uniforme. Le document de brevet français publié sous le numéro 2 822 960 décrit un "Système de détection sous-marine basse fréquence remorqué" comportant une antenne linéaire d'émission et une antenne linéaire de réception, les deux antennes étant sensiblement de même diamètre. Le document décrit en particulier un procédé pour insonifier tout l'espace au moyen d'une formation de voie à l'émission selon un mode directif tournant, appelé mode "RDT", dans lequel chaque projecteur est alimenté par le signal à émettre affecté d'un retard fonction de la direction moyenne de pointage de la voie. Selon ce document le signal à émettre étant en outre affecté d'un retard permettant d'élargir la voie d'émission, retard défini par une loi de retard ou de phase adaptée, une loi de type quadratique par exemple. Un signal similaire est émis successivement dans plusieurs directions par commutation des retards de façon à couvrir tout l'espace. Les secteurs d'émission étant larges, il suffit d'un nombre de secteurs bien inférieur au nombre de projecteurs.

Un tel système qui procède à une émission directive, sectorielle ou en mode "RDT" présente principalement deux types d'inconvénients.

Le premier inconvénient est lié au mode d'émission sectoriel qui nécessite que, comme pour toute antenne, chaque projecteur doive être alimenté indépendamment par une paire de conducteurs d'alimentation délivrant le signal retardé à émettre, ce qui conduit à un nombre élevé de paires dans le câble de remorquage, en particulier si l'on souhaite utiliser un nombre important de projecteurs.

Le second est que même en utilisant un mode d'émission de type "RDT" la couverture omnidirectionnelle est obtenue par rotation du secteur insonifié.

La durée d'émission dans chaque secteur est réduite pour un temps total d'émission donné. Le niveau est plus fort que dans le cas d'une émission omnidirectionnelle, mais il y a dégradation de la résolution doppler dans le cas de codes d'émission exploitant le doppler car la finesse Doppler dépend de la durée.

PRESENTATION DE L'INVENTION

Un but de l'invention est de proposer une solution permettant d'utiliser une antenne linéaire pour réaliser une émission réellement omnidirectionnelle.

A cet effet l'invention a pour objet un procédé pour réaliser une émission omnidirectionnelle au moyen d'une antenne linéaire tractée de longueur L, constituée d'une pluralité de P projecteurs espacés de manière appropriée ainsi qu'il est décrit plus loin sur la longueur de l'antenne, consistant à appliquer sur chaque projecteur un signal issu du signal d'émission commun à transmettre qu'on affecte d'un retard dont la valeur suit une loi de variation fonction de la position du projecteur dans l'antenne.

Selon un mode préféré de mise en oeuvre du procédé selon l'invention, sur une antenne dont les projecteurs sont sensiblement équidistants les uns des autres, et suffisamment rapprochés, c'est-à-dire espacé les uns des autres d'une distance sensiblement inférieure à $\lambda/2$, la loi de retard appliquée au signal en fonction de la position x du projecteur par rapport au centre de l'antenne est une loi quadratique de la forme:

$$\tau(x) = \alpha x^2.$$

Selon un mode de mise en oeuvre particulier de mise en oeuvre du procédé selon l'invention, sur une antenne dont les projecteurs sont sensiblement équidistants les uns des autres, et suffisamment rapprochés, la loi de variation du retard appliquée au signal en fonction de la position x du projecteur par rapport au centre de l'antenne est de la forme:

$$\tau(x) = \pm \frac{1}{c}[|x| + L\ln(L - |x|)].$$

Selon l'invention, le retard $\tau'(x)$ appliqué au signal est égal au retard $\tau(x)$ modulo une période $T_0$ correspondant à la fréquence centrale du signal émis, les valeurs $\tau'(x)$ étant quantifiées sur Q niveaux, de $\tau_1$ à $\tau_Q$.

Selon l'invention, les projecteurs dont les valeurs quantifiées $\tau_i$ du retard diffèrent de $T_0/2$ sont avantageusement alimentés par la même paire de fils d'alimentation, par simple inversion de polarité des fils d'alimentation, le nombre de paires de fils d'alimentation nécessaire étant ainsi avantageusement égal à Q/2.

Selon une autre variante du procédé selon l'invention, une partie des projecteurs centraux fait l'objet d'un regroupement par paires des projecteurs adjacents et les projecteurs extrêmes font l'objet d'un regroupement par paires de projecteurs symétriques par rapport au centre de l'antenne. Les projecteurs constituant une paire sont alors alimentés par un même signal $\tau_i$. Ces regroupements permettent avantageusement de réaliser soit une émission sectorielle en utilisant seulement les projecteur centraux, soit une émission omnidirectionnelle en utilisant la totalité des projecteurs.

L'invention a également pour objet une antenne linéaire adaptée à une mise en oeuvre optimisée du procédé selon l'invention, pour laquelle l'espacement des projecteurs suit une loi non linéaire, caractéristique qui permet avantageusement de minimiser le nombre de retards $\tau_i$ a réaliser tout en optimisant le nombre de transducteurs alimentés par un signal affecté d'un même retard $\tau_i$.

L'invention a encore pour objet un procédé pour réaliser une émission omnidirectionnelle dans le plan horizontal au moyen d'une antenne linéaire tractée de longueur L, constituée d'une pluralité de P projecteurs, lorsque cette antenne est tractée inclinée entre l'horizontale et la verticale. Selon ce procédé, on applique sur chaque projecteur un signal d'émission issu d'un signal d'émission commun auquel on applique un retard dont la valeur suit une loi non linéaire fonction de la position du projecteur dans l'antenne. Selon l'invention, cette loi est définie pour obtenir une émission sectorisée avec un secteur d'ouverture tel que l'insonification dans le plan horizontal reste omnidirectionnelle.

L'avantage essentiel apporté par le procédé selon l'invention est qu'il permet d'obtenir l'émission omnidirectionnelle d'un même signal pendant toute la durée de l'émission et non par insonifications successives de différents secteurs, ceci étant obtenu au moyen d'une antenne linéaire comportant une succession de projecteurs répartis sur la longueur de l'antenne, et alimentée par un nombre de paires d'alimentation réduit, ce nombre ne dépendant en outre pas du nombre de projecteurs composant l'antenne.

DESCRIPTION DES FIGURES

Les caractéristiques et avantages des différents aspects de l'invention apparaîtront clairement dans la description qui suit, description associée aux figures annexées qui représentent:

- la figure 1, les diagrammes de directivité d'une antenne comportant des projecteurs équirépartis sur sa longueur obtenus en appliquant au signal d'émission soit classiquement un retard $\tau(x)$ quadratique, soit le retard produit par le procédé selon l'invention;
- la figure 2, la loi de variation, en fonction du projecteur considéré, du retard $\tau(x)$ à appliquer au signal d'émission de référence, pour obtenir le diagramme en trait plein de la figure 1;
- la figure 3, une forme approchée de la loi de variation du retard $\tau(x)$ de la figure 2;
- la figure 4, les lois de variation, continue ou quantifiée, de la phase du signal d'émission de référence, correspondant à la loi de variation du retard $\tau(x)$ de la figure 3;
- les figures 5 et 6 des illustrations de variantes de mise en oeuvre du procédé selon l'invention;
- les figures 7 à 9, des illustrations relatives à un exemple de système sonar équipé d'une antenne permettant la mise en oeuvre du procédé selon l'invention,
- la figure 10, un exemple particulier de mise en ouvre du procédé selon l'invention pour réaliser une émission omnidirectionnelle dans un plan horizontal.

## DESCRIPTION DETAILLEE

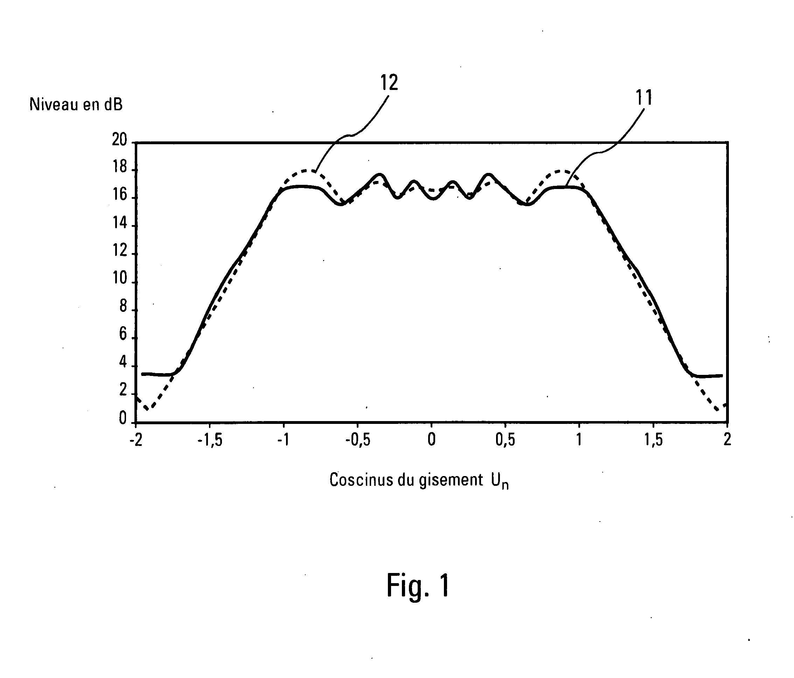

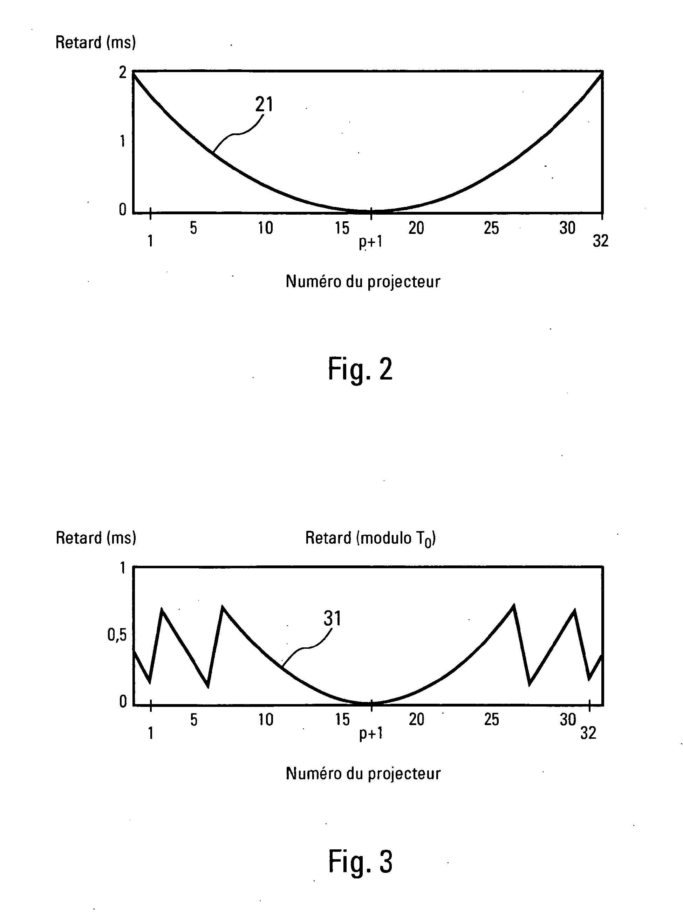

On s'intéresse d'abord aux figures 1 et 2.

Comme il a été dit précédemment, il est connu de l'art antérieur qu'une antenne linéaire de longueur L constituée de plusieurs projecteurs, peut être utilisée pour insonifier un secteur de l'espace. Cette émission est réalisée en appliquant à chaque projecteur un signal issu d'un signal d'émission commun auquel on applique un retard variable $\tau(x)$ dont la loi de variation est une loi linéaire en fonction du gisement de pointage $\theta$ souhaité par rapport à l'axe de l'antenne. Par suite le retard appliqué à un projecteur situé à une distance x du point central de l'antenne a pour expression générale:

$$\tau(x) = \frac{x}{c}\cos(\theta) \qquad [1]$$

où c représente la vitesse du son dans l'eau.

Le procédé selon l'invention consiste dans un premier temps à appliquer au signal utilisé pour alimenter les projecteurs, une loi de retard $\tau(x)$ non linéaire, fonction de la position x du projecteur considéré par rapport au centre de l'antenne, loi dont l'expression varie en fonction de la structure de l'antenne linéaire considérée.

Ainsi dans le cas d'une antenne comportant des projecteurs équirépartis sur sa longueur, le faisceau d'émission peut être élargi, de façon à obtenir un diagramme de directivité tel que celui présenté par la courbe 11, en trait plein, de la figure 1, en superposant à la loi de retard linéaire donnée par la relation [1], une loi non linéaire $\tau(x)$, par exemple quadratique, en fonction de la position x du projecteur par rapport au centre de l'antenne. Cette loi a pour expression générale:

$$\tau(x) = \alpha x^2 \qquad [2]$$

dans laquelle $-\dfrac{L}{2} \leq x \leq \dfrac{L}{2}$ .

Le coefficient $\alpha$ est ici lié à l'ouverture angulaire du diagramme d'émission que l'on souhaite obtenir. De manière générale, on choisit un coefficient $\alpha$ de la forme:

$$\alpha = \beta \cdot 2\pi / (\lambda \cdot L) \qquad [3]$$

où $\lambda$ est la longueur d'onde et où $\beta$ représente un coefficient, dont la valeur est comprise dans l'intervalle ]0, 1.5], déterminant l'ouverture angulaire du diagramme d'émission souhaité.

La courbe 11 de la figure 1 correspond au diagramme d'émission obtenu avec une antenne linéaire comportant 32 projecteurs équidistants et à l'application au signal d'émission d'une loi de retard quadratique $\tau(x)$ conforme à la relation [2].

La courbe 21 de la figure 2 représente la loi de variation en fonction du projecteur considéré du retard $\tau(x)$ à appliquer au signal commun de référence, correspondant au milieu de l'antenne, pour obtenir le diagramme 11 de la figure 1. La loi est ici représentée dans le cas d'une antenne linéaire comportant 32 projecteurs équidistants les uns des autres.

De façon similaire, dans le cas d'une antenne comportant des projecteurs répartis suivant un pas variable le long de l'antenne, le faisceau d'émission peut être élargi en superposant à la loi de retard linéaire donnée par la relation [1], une loi non linéaire $\tau(x)$ dont l'expression, en fonction de la position x du projecteur par rapport au centre de l'antenne, est donnée par la relation suivante:

$$\tau(x) = \pm\frac{1}{c}[|x| + L\ln(L - |x|)] \qquad\qquad [4]$$

dans laquelle $-\dfrac{L}{2} \le x \le \dfrac{L}{2}$.

Dans les deux cas cités précédemment, on obtient en appliquant la loi de retard appropriée, un faisceau omni directionnel, à condition toutefois de prendre des précautions particulières quant à la répartition de projecteurs le long de l'antenne.

En effet, il est connu de l'art antérieur que dans le cas d'une antenne comportant des projecteurs équiespacés avec un pas d(x) constant, le diagramme de directivité représenté en fonction de la variable u = $\cos\theta$, $\theta$ étant l'angle entre la direction considérée et la direction du faisceau émis (u=$\cos\theta$, variant de -1 à +1) est un diagramme périodique de période égale à $\lambda$/d.

De sorte que, pour éviter un repliement qui conduirait à des oscillations prohibitives du diagramme de directivité, le pas d doit vérifier de manière connue, dans le cas d'une émission omni directionnelle, la relation suivante:

$$\frac{\lambda}{d} \ge 2 + U_t \Leftrightarrow d \le \frac{\lambda}{2 + U_t} \qquad\qquad [5]$$

où $U_t$ représente la bande de transition du diagramme de directivité représenté dans l'espace des u.

Cette condition conduit habituellement dans le cas général, pour une antenne à projecteurs équidistants, à disposer les projecteurs le long de l'antenne avec un pas d légèrement inférieur à $\lambda$/2. Cependant, dans le cas ou l'on utilise une loi de retard telle que celle décrite par la relation [2], la bande de transition $U_t$ se comporte dimensionnellement comme $\sqrt{\lambda/L}$ ce qui conduit à adopter pour la répartition des projecteurs, un espacement proche de $\lambda$/4 à $\lambda$/3 selon le nombre de projecteurs de l'antenne.

Dans le cas particulier des antennes a capteurs non équidistants pour lesquelles on applique au signal une loi de retard telle que celle décrite par la relation [4], la condition [5] s'applique aux projecteurs extrêmes de l'antenne, qui sont les plus rapprochés. La bande de transition $U_t$ se comporte dimensionnellement comme $\sqrt{\lambda/L}$ également, ce qui conduit pour le pas d(x=L/2) à un espacement proche de $\lambda$/4 à $\lambda$/3 selon le nombre de projecteurs de l'antenne.

Cette condition imposée à la valeur de l'espacement entre projecteurs est une condition impérative qui influe sur la structure de l'antenne utilisée et donc sur l'efficacité du procédé selon l'invention. En effet, si cette condition d'espacement des projecteurs n'est pas respectée, le signal émis n'est plus le même dans toutes les directions et donc n'est plus vraiment omnidirectionnel du fait des repliements du diagramme de directivité qui en résultent.

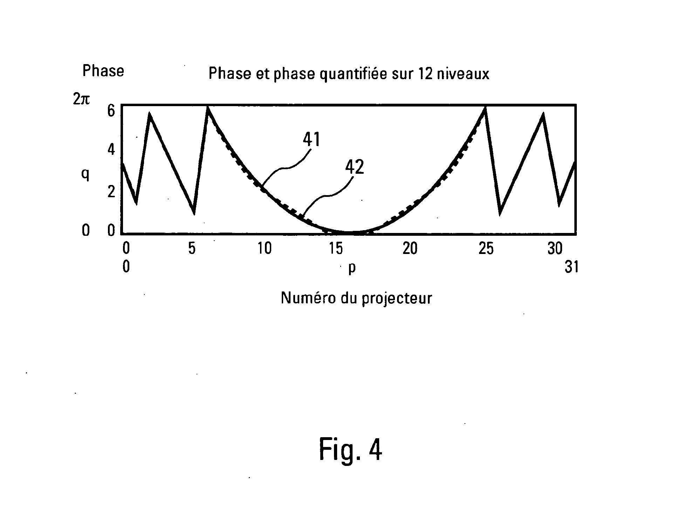

On s'intéresse ensuite aux figures 3 et 4.

Les signaux d'émission utilisés en sonar actifs étant des signaux ayant une bande passante B centrés autour d'une fréquence centrale $F_0$, le procédé selon l'invention consiste dans un deuxième temps à approximer la loi de retard appliquée par son expression modulo $T_0 = 1/F_0$. Par suite le retard appliqué à un projecteur, dans le cas d'une antenne à projecteurs équirépartis par exemple, aura pour expression:

$$\tau^{'}(x) = \alpha x^2 \quad \left[ \text{modulo } T_0 \right] \qquad\qquad [6]$$

Cette loi de retard modulo $T_0$ s'écrit plus simplement en terme de loi de phase appliquée au signal, sous la forme :

$$\varphi(x) = 2\pi F_0 \tau(x) \qquad\qquad [7]$$

Dans le cas d'une loi de retard $\tau(x)$ choisie pour former des voies, cette approximation, dite approximation bande étroite, est acceptable pour autant que la condition suivante, relativement contraignante, qui lie la largeur de bande B du signal et la longueur d'antenne L, soit vérifiée:

$$B \ll c/L \qquad\qquad [8]$$

Où c représente la vitesse du son dans le milieu de propagation.

Toutefois, dans le cas de lois de retard du type de la relation [2] ou de la relation [4], utilisées pour obtenir une émission omnidirectionnelle, une condition beaucoup moins contraignante que la condition [8] s'applique, de sorte que l'utilisation par le procédé selon l'invention des approximations [6] et [7] est généralement possible.

La substitution d'une loi de retard approchée à la loi de retard initiale dans le procédé selon l'invention présente un grand avantage. Elle permet en effet, de limiter la possibilité de variation du retard à appliquer au signal d'émission à un intervalle $[0 ; T_0]$ (variation de la phase du signal entre 0 et $2\pi$). Cette caractéristique avantageuse est illustrée par la courbe de retard 31 de la figure 3 et la courbe de déphasage 41, en trait plein, de la figure 4, courbes relatives à l'antenne dont le diagramme de directivité est illustré par la courbe 11 de la figure 1.

Le procédé selon l'invention consiste dans un troisième temps à opérer une quantification des valeurs de retard obtenues pour les différents projecteurs constituant l'antenne. Selon un mode de mise en oeuvre préférentiel du procédé selon l'invention, l'intervalle de retard $[0 ; T_0]$ est divisé en Q niveaux équidistants. Par suite, chaque projecteur est alimenté par le signal d'émission affecté d'un retard dont la valeur $\tau_i(x)$ est à la valeur quantifiée est la plus proche de la valeur approximée $\tau'(x)$. Ainsi suivant le procédé selon l'invention on réalise donc à une quantification des retards sur Q états.

Selon l'invention le nombre de niveaux de quantification est réalisée de façon à ce que la fluctuation selon le gisement du niveau émis réponde aux exigences fixées. Ainsi, par exemple, pour une quantification réalisée sur 16 pas, la fluctuation théorique attendue du niveau de signal émis en fonction du gisement est de $\pm 1.5$ dB.

L'opération de quantification, judicieusement réalisée, présente un grand avantage. En effet, elle permet d'alimenter l'ensemble des projecteurs, quel que soit le nombre de projecteurs qui constitue l'antenne, avec un nombre limité de Q signaux, chaque signal étant déduit du signal d'émission par application d'un retard $\tau_i$ déterminé parmi les Q retards possibles. Cette limitation par quantification des valeurs de retard possibles permet avantageusement de limiter le nombre de paires de conducteurs nécessaires pour alimenter l'ensemble des projecteurs en signal, à un nombre maximum de Q paires. On limite de la sorte avantageusement la complexité des moyens chargés de réaliser ces retards, ainsi que la quantité de conducteurs à employer et donc le poids du câble d'alimentation de l'antenne.

La courbe 42, en trait pointillé, de la figure 4 présente à titre d'exemple, la loi de variation de phase obtenue en réalisant la quantification sur 12 états de la loi de phase représentée par la courbe 41. La quasi superposition des courbes 41 et 42 permet de se rendre bien compte, au travers de l'exemple, du caractère avantageux de l'étape de quantification mise en oeuvre par le procédé selon l'invention, étape qui n'est elle même possible qu'après application de l'approximation bande étroite à la loi non linéaire $\tau(x)$.

Le diagramme de directivité du signal obtenu par le procédé selon l'invention et émis par l'antenne est représenté par la courbe 12, en trait pointillé, de la figure 1. La ressemblance étroite de cette courbe avec la courbe théorique obtenue par application d'une loi de retard non linéaire définie par la relation [2] rend également compte du caractère avantageux du procédé selon l'invention.

Ainsi, la mise en oeuvre du procédé selon l'invention permet donc de manière directe de réaliser une émission omnidirectionnelle au moyen d'une antenne linéaire comportant un pluralité de projecteurs, en alimentant ces projecteurs avec seulement Q signaux d'alimentation. Chacun de ces signaux étant réalisé à partir d'un signal commun en appliquant une valeur de retard (ou de déphasage) parmi les Q valeurs retenues. Cependant, il est avantageux de considérer le point suivant. Si on tient compte du fait que pour modifier d'une demi période $T_0$ la durée du retard appliqué au signal d'alimentation commun pour alimenter un projecteur donné, il suffit d'inverser la polarité du signal alimentant ce projecteur. Cette inversion de polarité peut être facilement obtenue en permutant les fils d'alimentation sur les bornes du projecteur. De la sorte, l'ensemble des Q signaux peut être obtenu en générant Q/2 signaux d'alimentation, issus du même signal retardé entre [0 ; $T_0/2$] (ou déphasé entre 0 et $\pi$), au moyen de N=Q/2 paires d'alimentation dans le câble.

Dans une telle configuration, chaque paire peut alimenter un nombre différent de transducteurs d'émission, l'adaptation étant réalisée de manière spécifique pour les Q/2 circuits émetteurs correspondants.

Le nombre Q de signaux d'alimentation utilisés n'est avantageusement pas fixé a priori et ne dépend pas de manière directe du nombre total de projecteurs contenus dans l'antenne. Cependant, l'analyse de l'effet sur le diagramme de directivité des approximations liées au pas de quantification, indique qu'une quantification sur un nombre de retards de l'ordre de Q=10 à 20 valeurs est acceptable. Une telle quantification conduit à introduire de 5 à 10 paires de câbles d'alimentation dans le câble de remorquage pour alimenter l'ensemble des projecteurs.

L'invention présentée permet donc avantageusement, en quantifiant de manière judicieuse les retards, de limiter de manière rationnelle le nombre N de paires d'alimentation dans le câble de remorquage, et d'alimenter autant de projecteurs que nécessaire pour le niveau d'émission omnidirectionnel voulu.

Il est à noter qu'en mode directif la pondération est linéaire et la quantification de la phase est limitée comme indiqué précédemment (approximation bande étroite) par la condition:

$$L << c/B$$

En mode omnidirectionnel en revanche, avec les lois de retard définies par les relations [2] et [4] faisant l'objet de la présente invention, la limitation de longueur d'antenne linéaire permettant un mode omnidirectionnel est moins sévère. Elle est définie par la condition suivante :

$$L << (4f/B) \cdot c/B \qquad\qquad [9]$$

Où f représente la fréquence émise et B la bande passante du signal émis.

Le terme 4f/B est forcément supérieur à 1 car f >> B, par suite la limitation en longueur d'antenne est donc moins contraignante dans le cas d'une émission omnidirectionnelle que dans le cas d'une émission directive. Ainsi, par exemple, si l'on émet un signal de fréquence centrale égale à 1.5 KHz et de 300 Hz de largeur de bande, il est possible d'utiliser une antenne d'une longueur pouvant atteindre 100 m. Pour un signal de même fréquence centrale mais de 1 kHz de bande passante il est encore possible d'utiliser une antenne limitée à 9 mètres.

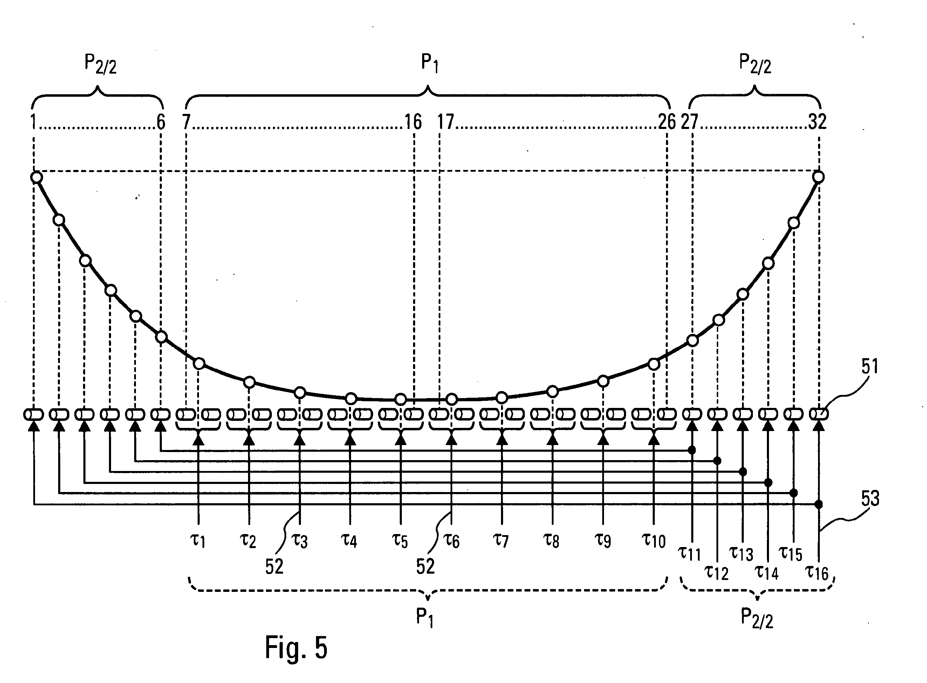

On s'intéresse ensuite à la figure 5.

Comme on peut le constater sur les figures précédentes et en particulier sur la figure 2, dans le cas de la loi de retard $\tau(x)$ quadratique définie par la relation [2], c'est au niveau des projecteurs situés sur les extrémités de l'antenne que la variation du retard est la plus rapide. Par suite, la condition [5] qui traduit la double contrainte d'échantillonner correctement les variations les plus rapides du retard tout en gardant un pas constant entre les projecteurs, doit être respectée pour les projecteurs les plus éloignés du centre de l'antenne. En revanche, en ce qui concerne les projecteurs les plus centraux un espacement double apparaît acceptable. Cette constatation conduit à envisager de regrouper un certain nombre de projecteurs de la zone centrale par paires constituées de deux projecteurs adjacents. Ce regroupement permet avantageusement d'alimenter l'antenne avec un nombre de paires de câbles d'alimentation réduit plus faible que le nombre de projecteurs. En outre, on constate également que du fait de la symétrie de la loi de retard par rapport au centre de l'antenne, il est possible d'alimenter les projecteurs symétriques par la même paire. C'est cette caractéristique avantageuse qu'exploite le mode préféré de mise en oeuvre du procédé selon l'invention, dont un exemple concret est illustré par la figure 5.

Dans cet exemple d'application du mode préférentiel de mise en oeuvre, on considère une antenne comportant P=32 projecteurs 51 disposés le long de l'antenne avec un pas d d'environ 0,20m. La fréquence centrale de travail est ici égale à $F_0$.=1500Hz. Sur la figure les projecteurs 51 sont numérotés de 1 à 32, le centre de l'antenne étant situé entre les projecteurs 16 et 17.

Les 20 projecteurs centraux, numérotés 7 à 26, sont regroupés par paire de projecteurs adjacents ((7,8), (9,10)...(25,26). Chaque paire de projecteur est alimentée par une paire de conducteurs 52.

Les 12 projecteurs latéraux restants, numérotés 1 à 6 et 27 à 32, sont regroupés de façon symétrique par rapport au centre ((1,32), (2,31),...(6,27)). Chaque paire de projecteur est également alimentée par une paire de conducteurs 53.

Un avantage de ce type de mise en oeuvre est que, bien que l'antenne comporte 32 projecteurs, son alimentation en signal nécessite seulement 16 paires de conducteurs. En outre, dans un tel mode, chaque paire de conducteurs se trouve chargée par un nombre identique de projecteurs (égal à 2).

Une variante du mode préféré de mise en oeuvre du procédé selon l'invention, non illustrée, consiste à regrouper par paires les paires de projecteurs qui regroupent deux à deux les projecteurs de la zone centrale de l'antenne. On regroupe ainsi deux à deux les paires de projecteurs symétriques par rapport au point central de l'antenne. Ainsi, dans l'exemple précédent les 10 paires de projecteurs centraux adjacents sont regroupées par paires symétriques ([(7, 8), (25, 26)]; [(9, 10), (23, 24)]; ..etc). Chaque quartet de projecteurs ainsi constitué est alors alimenté par une paire de conducteurs électriques, de sorte que, dans cette variante avantageuse il suffit avantageusement de 5 paires de conducteurs électriques pour alimenter les 20 projecteurs centraux et de 11 paires de conducteurs pour alimenter l'ensemble de l'antenne.

Par suite, en appliquant au signal d'émission une loi de retard quadratique quantifiée sur seulement 11 états, on réalise une émission omnidirectionnelle au moyen d'une antenne linéaire.

Une caractéristique avantageuse de cette variante préférée de mise en oeuvre du procédé selon l'invention est qu'elle permet de mettre en oeuvre des modes d'émission aussi bien omnidirectionnels que directifs.

Cette fonctionnalité double est par exemple obtenue de manière simple en différentiant la nature du retard appliqué au signal d'émission selon qu'il alimente les projecteurs périphériques ou les projecteurs centraux.

Ainsi, si l'on utilise une antenne linéaire comportant P projecteurs équiespacés, 48 projecteurs par exemple, dont le positionnement satisfait la condition [5] il est avantageusement possible de réaliser à la fois une émission sectorielle directive et une émission omnidirectionnelle. Pour ce faire, on sélectionne par exemple un nombre pair $P_1$ de projecteurs, par exemple 20 projecteurs, positionnés dans la partie centrale de l'antenne, et on regroupe ces projecteurs en $N_1=P_1/2$ paires de projecteurs adjacents que l'on alimente avec $N_1$ paires de conducteurs indépendantes. Les $P_2=P-P_1$ projecteurs restants, 28 projecteurs dans l'exemple considéré, sont regroupés par deux symétriquement par rapport au centre de l'antenne, constituant $N_2=P_2/2$ paires alimentées par N=Q/2 paires supplémentaires correspondant à une quantification des retards sur Q états, q étant par exemple égal à 12.

Par suite, pour réaliser une émission en mode directif, sectoriel, les $P_1$ projecteurs centraux sont alimentés avec $N_1$ signaux indépendant selon une loi de retard $\tau(x)$ définie par la relation [1], permettant de constituer un diagramme d'émission dans une direction donnée, tandis que les $P_2$ projecteurs extérieurs ne sont pas utilisés. De même, pour réaliser une émission en mode omnidirectionnel, l'ensemble des P projecteurs est alimenté. Les $P_1$ projecteurs centraux sont alimentés avec $N_1$ signaux selon une loi de retard quadratique du type de celle définie par la relation [2], tandis que les $P_2$ projecteurs extérieurs sont alimentés avec N signaux matérialisant une loi de retard quadratique quantifiée sur Q états de retard $\tau_i$.

De la sorte le retard appliqué en particulier aux projecteurs centraux peut être défini par la relation générale suivante:

$$\tau(x) = \frac{x}{c} \cdot \cos \theta + \alpha x^2 \qquad [10]$$

Ainsi, lorsque $\alpha$ est égal à 0, on obtient une émission sectorielle dirigée dans la direction $\theta$, tandis que lorsque $\alpha$ est égal à $2\pi/(\lambda \cdot L)$ on obtient une émission omnidirectionnelle.

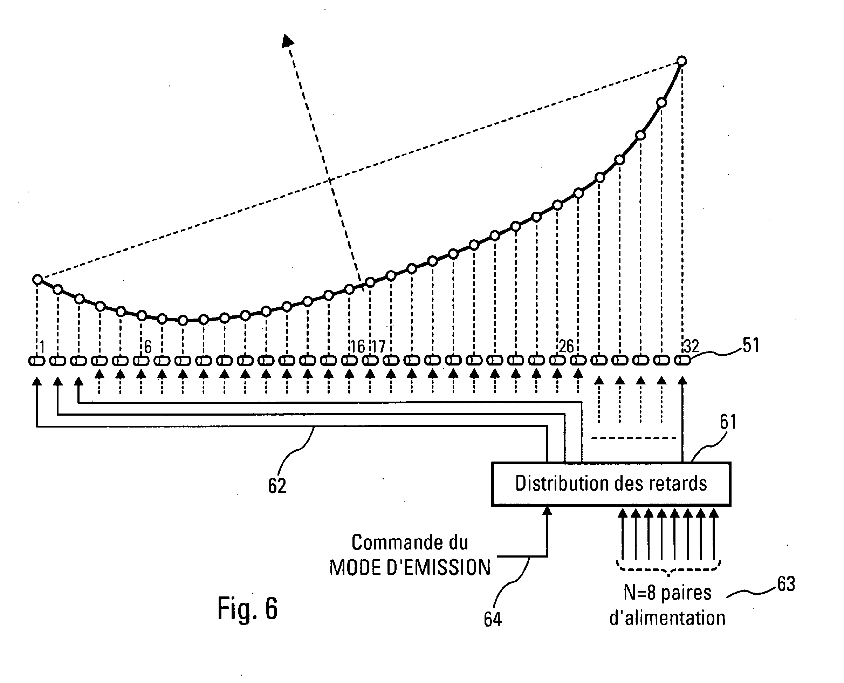

On s'intéresse ensuite à la figure 6.

Cette variante de mise en oeuvre du procédé selon l'invention, illustrée par la figure 6, est destinée plus particulièrement à un système sonar comportant une antenne linéaire d'émission associée à des moyens de commutation particuliers 61 permettant de distribuer sur chaque projecteur un signal d'émission qui dépend du type d'émission souhaité. Dans cette variante, tous les projecteurs sont avantageusement utilisés quel que soit le mode d'émission choisi, sectoriel ou omnidirectionnel, ce qui permet d'obtenir un niveau d'émission maximal. Dans l'antenne linéaire considérée, chaque projecteur 61 est alimenté par une paire de conducteurs particulière 62, le signal d'alimentation appliqué sur cette paire étant sélectionné par les moyens commutation 61 parmi N signaux d'alimentation 63 issus d'un même signal d'émission auquel on applique des retards déterminés en fonction de la loi de retard correspondant au mode d'émission souhaité.

Ainsi, on peut en particulier obtenir :

- un mode omnidirectionnel à niveau maximum, avec uniquement l'application d'une loi de retard quadratique du type de celle définie par la relation [2],

- un mode sectoriel à niveau maximum, avec application d'une loi de retard $\tau(x)$ pouvant être défini par la relation [10], l'ouverture du secteur d'émission étant réalisée par la composante quadratique de la relation [10] et la direction $\theta$ d'émission par la composante linéaire fonction de $\theta$,
- un mode essentiellement directif à niveau maximum, avec application d'une loi de retard $\tau(x)$ pouvant être défini par la relation [1] qui décrit une variation linéaire du retard appliqué pour un angle de pointage $\theta$ donné.

Ainsi, selon le mode considéré, on applique N signaux d'alimentation 64 présentant une loi de retard conforme au mode d'émission souhaité, la distribution des N signaux sur les projecteurs étant réalisée par les moyens de commutation 61 en fonction du signal de commande 64.

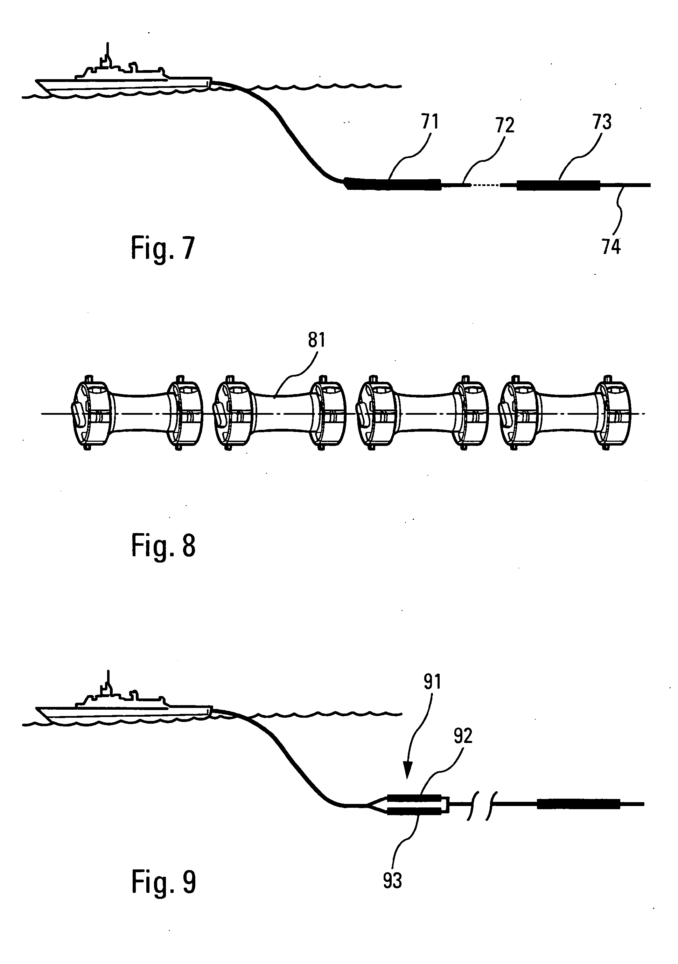

On s'intéresse à présent aux figures 7 à 9.

La figure 7 présente de manière schématique une vue d'ensemble des antennes équipant un exemple de système sonar capable de mettre en oeuvre le procédé selon l'invention. Dans ce système, l'antenne linéique d'émission 71, tractée de manière sensiblement horizontale, est suivie d'un élément léger 72 et d'une antenne linéaire de réception 73. outre le fait qu'il assure la liaisons mécanique entre l'antenne d'émission et l'antenne de réception, l'élément 72 a pour fonction d'éloigner l'antenne de réception 73 du porteur. L'antenne linéaire de réception 73 peut selon les cas être une antenne linéaire simple ou bien une antenne directive comportant des triplets d'hydrophones. L'ensemble est complété par un filin de queue 74 permettant le déploiement automatique sans intervention d'un opérateur suivant un procédé déjà qualifié en mer pour les antennes linéaires de réception classiques.

Selon un mode de réalisation possible de l'ensemble, l'antenne d'émission peut être réalisée au moyen de projecteurs flextenseurs cylindriques 81 tels que ceux présentés sur l'illustration de la figure 8, l'antenne de réception étant quant à elle une antenne linéaire à triplets. L'ensemble présente un diamètre sensiblement constant, pouvant être inférieur à 100 mm et peut avantageusement être enroulé sur un treuil. Les tronçons d'émission de diamètres supérieurs, 120 ou 150 mm par exemple, peuvent être traités au moyen de systèmes d'enroulement à mémoire.

Dans une variante de réalisation d'un tel système, illustrée par la figure 9, il est possible d'intégrer une antenne linéaire d'émission 91 formée d'au moins deux antennes 92, 93 superposées verticalement et mise en oeuvre suivant le procédé selon l'invention. Cette configuration permet avantageusement, dans le contexte d'une émission omnidirectionnelle par exemple, de minimiser l'énergie émise dans un plan vertical, vers le haut et vers le bas. L'espacement entre les antennes d'émission 92 et 93 est alors typiquement de la moitié de la longueur d'onde moyenne. Cette configuration permet ainsi avantageusement de concentrer l'énergie dans un plan horizontal quelle que soit la direction d'émission.

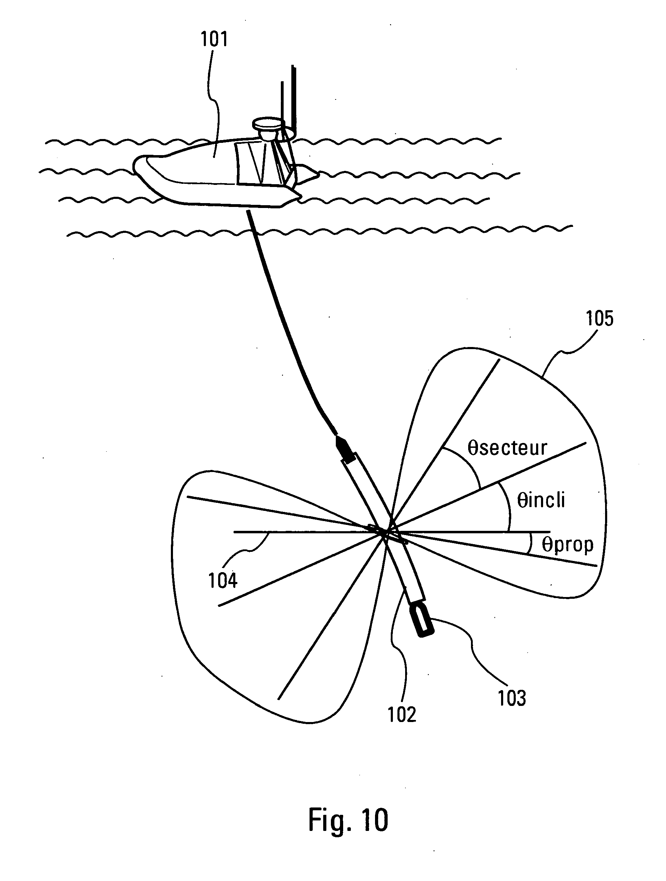

On s'intéresse enfin à la figure 10

L'application du procédé d'émission selon l'invention illustrée par la figure 10, consiste à réaliser une émission omnidirectionnelle dans un plan horizontal au moyen d'une antenne linéaire tractée dans une position inclinée, voire sensiblement verticale. Dans cette application, on met en oeuvre le procédé selon l'invention pour réaliser une émission sectorielle avec une largeur de diagramme d'émission variable par application d'une loi de retard non linéaire au signal émis. Le système d'émission ainsi conçu est un système enroulable de faible diamètre pouvant être mis en oeuvre par un véhicule porteur 101 de faible taille, éventuellement autonome et inhabité, de type « USV » par exemple. Il comporte une antenne d'émission linéaire 102 telle que celle décrite précédemment dont la structure interne est éventuellement alourdie, ainsi qu'un élément de queue 103 enroulable, lourd, permettant de maintenir l'antenne d'émission tractée le plus possible en position verticale, même lorsque le porteur 101 est en mouvement.

De la sorte on considère que l'antenne fait avec l'horizontale un angle $\theta_{inclin}$, qui varie en fonction de la vitesse du porteur 101. D'autre part, on considère également qu'en fonction des conditions de propagation dans le milieu, une bonne insonification de la colonne d'eau à grande distance nécessite que cette insonification soit réalisée avec un angle $+/-\theta_{propa}$ par rapport à l'horizontale 104. Par suite, si l'on tient compte des deux paramètres précédents et pour obtenir une insonification omnidirectionnelle dans un plan horizontal, la largeur du secteur insonifié $+/-\theta_{secteur}$ autour de la perpendiculaire à l'antenne doit être en permanence ajustée de façon à vérifier la relation suivante:

$$\theta_{secteur} > \theta_{inclin} + \theta_{propa} \qquad\qquad [11]$$

Un lobe d'émission remplissant la condition précédente, avec un gain sensiblement constant dans les directions délimitées par l'angle $\theta_{secteur}$, peut avantageusement être obtenu par le procédé selon l'invention, en appliquant une loi de retard non linéaire de type quadratique, loi qui permet en particulier d'obtenir un niveau d'émission quasi constant dans le secteur insonifié. La variation 105 du gain d'émission en fonction de l'angle $\theta$ considéré $\theta_{secteur}$ par rapport au niveau omnidirectionnel est représentée de manière symbolique sur la Figure 9. Un tel lobe d'émission élargi obtenu par le procédé selon l'invention est avantageusement bien mieux adapté aux contraintes de fonctionnement d'un tel système qu'un lobe d'émission avec une ouverture à -3dB étroite obtenu au moyen d'une antenne linéaire dont tous les projecteurs émettent simultanément de manière classique.

Un tel système d'émission monté sur un porteur mobile et capable d'émettre même lorsque le porteur est en mouvement permet avantageusement d'insonifier rapidement une large zone, et sous des angles fort différents. Il facilite en outre la localisation et classification d'objets sur zone, par exemple en exploitant un mode de réception multistatique.

Avantageusement, il est également possible avec ce type d'application du procédé selon l'invention de procéder à une insonification locale d'une tranche d'eau située à une profondeur plus faible, au-dessus de l'antenne. Pour ce faire, il suffit d'immobiliser et de stabiliser le porteur 101 pour positionner l'antenne 102 à la verticale et avoir ainsi $\theta_{inclin}$ = 0°. On peut ainsi insonifier une tranche d'eau supérieure avec un niveau d'insonification supérieur de par exemple 8dB par rapport au niveau obtenu avec une insonification omnidirectionnelle.

Ainsi, comme on peut le constater au travers des différents modes de mise en oeuvre décrits ici à titre d'exemples non limitatifs le procédé selon l'invention permet non seulement de réaliser une émission réellement omnidirectionnelle au moyen d'une antenne linéaire, mais également de réaliser des émissions sectorielles pour lesquelles la largeur du diagramme d'émission est avantageusement adaptée à l'application envisagée. Il permet également de concevoir des antennes linéaires pouvant alterner sans modifications de structure des modes d'émissions sectoriels et omnidirectionnels. Dans certains modes de mise en oeuvre, il permet en outre de réduire de manière très significative le nombre de paires de conducteurs nécessaires pour alimenter en signal d'émission les projecteurs composant l'antenne linéaire utilisée.

**Revendications**

1. Procédé pour réaliser une émission omnidirectionnelle au moyen d'une antenne linéaire tractée de longueur L supérieure à la longueur d'onde λ du signal émis, constituée d'une pluralité de P projecteurs (51), **caractérisé en ce que**, l'espacement entre projecteurs (51) étant sensiblement inférieur à λ/2, on applique sur chaque projecteur un signal d'émission issu d'un signal d'émission commun, ce signal commun étant affecté d'un retard τ(x) dont l'expression suit une loi non linéaire fonction de la position x du projecteur dans l'antenne, l'application de cette loi permettant de moduler l'ouverture angulaire du diagramme d'émission.

2. Procédé selon la revendication 1, selon lequel, les projecteurs (51) constituant l'antenne étant sensiblement équidistants les uns des autres, et espacé d'une distance sensiblement inférieure à λ/2, la loi de retard appliquée au signal en fonction de la position x du projecteur par rapport au centre de l'antenne est une loi quadratique de la forme:

$$\tau(x) = \alpha x^2.$$

3. Procédé selon la revendication 1, selon lequel, les projecteurs (51) étant distants les uns des autres d'une distance diminuant du centre vers les extrémités, distance sensiblement inférieure à λ/2, la loi de retard appliquée au signal en fonction de la position x du projecteur par rapport au centre de l'antenne est de la forme:

$$\tau(x) = \pm \frac{1}{c}[|x| + L\ln(L - |x|)].$$

4. Procédé selon les revendications 1 à 3, selon lequel le retard τ'(x) appliqués au signal est égal au retard τ(x) modulo une période $T_0$ correspondant à la fréquence centrale du signal émis, les valeurs τ'(x) étant quantifiées sur Q niveaux, de $\tau_1$ à $\tau_Q$.

5. Procédé selon les revendications 1 à 4, selon lequel les projecteurs pour lesquels les valeurs quantifiées $\tau_i$ du retard diffèrent de $T_0/2$ sont alimentés par la même paire d'alimentation, par simple inversion de polarité des fils d'alimentation, le nombre de paires de fils d'alimentation nécessaire étant ainsi égal à Q/2.

6. Procédé selon l'une des revendications 1, 2, 4 ou 5 selon lequel une partie des projecteurs centraux de l'antenne linéaire fait l'objet d'un regroupement par paires des projecteurs adjacents et les projecteurs extrêmes font l'objet d'un regroupement par paires de projecteurs symétriques par rapport au centre de l'antenne, les projecteurs constituant une paire étant alimentés par un même signal $\tau_i$ (52, 53), ces regroupements permettant de réaliser soit une émission sectorielle en utilisant seulement les projecteur centraux, soit une émission omnidirectionnelle en utilisant la totalité des projecteurs.

**7.** Antenne d'émission pour mettre en oeuvre le procédé selon la revendications 6 **caractérisée en ce que** chaque projecteur (51) étant alimenté par une paire de conducteur propre (62), elle comporte des moyens de commutation (61) permettant d'alimenter lesdits projecteurs au moyen d'un nombre N donné de signaux d'alimentation (63), le nombre N étant inférieur au nombre P de projecteurs composant l'antenne.

**8.** Antenne d'émission pour mettre en oeuvre le procédé selon l'une des revendications 1 à 6 **caractérisée en ce qu'**elle comporte deux antennes linéaires (92, 93) superposées verticalement de façon à minimiser l'énergie émise vers le haut et vers le bas, les deux antennes étant espacées d'un écart sensiblement égal à la moitié de la longueur d'onde moyenne $\lambda$, permettant ainsi de limiter l'émission verticale d'énergie vers la surface ou vers le fond.

**9.** Procédé pour réaliser une émission omnidirectionnelle dans un plan horizontal au moyen d'une antenne linéaire tractée (102) de longueur L, constituée d'une pluralité de P projecteurs, l'antenne étant tractée dans toute position de navigation entre l'horizontale et la verticale, **caractérisé en ce que** l'on applique sur chaque projecteur un signal d'émission issu d'un signal d'émission commun auquel on applique un retard dont la valeur suit une loi non linéaire fonction de la position du projecteur dans l'antenne ; cette loi étant définie automatiquement en fonction de la vitesse du porteur (101) pour modifier l'ouverture du secteur insonifié en fonction de l'inclinaison de l'antenne par rapport à la verticale.

**10.** Procédé selon la revendication 11, dans lequel la loi non linéaire est définie pour obtenir un angle d'ouverture $\theta_{secteur}$ du diagramme d'émission répondant à la condition:

$$\theta_{secteur} > \theta_{inclin} + \theta_{propa}$$

où $\theta_{inclin}$ représente l'angle d'inclinaison de l'antenne par rapport à l'horizontale et $\theta_{propa}$ la direction d'émission considérée.

**Claims**

**1.** A method for realising an omnidirectional transmission by means of a towed linear antenna of length L that is greater than the wavelength $\lambda$ of the transmitted signal, constituted by a plurality of P projectors (51), **characterised in that**, with the spacing between projectors (51) being substantially less than $\lambda/2$, a transmission signal coming from a common transmission signal is applied to each projector, with a delay $\tau(x)$ being imposed on said common signal, the expression of which follows a non-linear rule as a function of the position x of the projector in the antenna, the application of this rule allowing the angular aperture of the transmission pattern to be modulated.

**2.** The method according to claim 1, wherein, with the projectors (51) that constitute the antenna being substantially equidistant from each other, and separated by a distance that is substantially less than $\lambda/2$, the delay rule that is applied to the signal as a function of the position x of the projector relative to the centre of the antenna is a quadratic rule of the form:

$$\tau(x) = \alpha x^2.$$

**3.** The method according to claim 1, wherein, with the projectors (51) being separated from each other by a distance that decreases from the centre to the ends, which distance is substantially less than $\lambda/2$, the delay rule that is applied to the signal as a function of the position x of the projector relative to the centre of the antenna is of the form:

$$\tau(x) = \pm \frac{1}{c}[|x| + L\ln(L - |x|)].$$

4. The method according to any one of claims 1 to 3, wherein the delay $\tau'(x)$ that is applied to the signal is equal to the delay $\tau(x)$ modulo a period $T_0$ that corresponds to the central frequency of the transmitted signal, the values $\tau'(x)$ being quantified on Q levels from $\tau_1$ to $\tau_Q$.

5. The method according to any one of claims 1 to 4, wherein the projectors for which the quantified values $\tau_i$ of the delay differ by $T_0/2$ are fed by the same feed pair by simply reversing the polarity of the feed wires, the number of pairs of feed wires that is necessary thus being equal to Q/2.

6. The method according to claim 1, 2, 4 or 5, wherein some of the central projectors of the linear antenna are grouped together in pairs of adjacent projectors and the end projectors are grouped into pairs of projectors that are symmetrical relative to the centre of the antenna, the projectors that constitute a pair being fed with the same signal $\tau_i$ (52, 53), said groupings allowing either a sectorial transmission to be carried out using only the central projectors or an omnidirectional transmission to be carried out using all of the projectors.

7. A transmission antenna for implementing the method according to claim 6, **characterised in that**, with each projector (51) being fed by a specific pair of conductors (62), it comprises switching means (61) for feeding said projectors by means of a given number N of feed signals (63), said number N being less than the number P of projectors that compose the antenna.

8. The transmission antenna for implementing the method according to any one of claims 1 to 6, **characterised in that** it comprises two linear antennae (92, 93) that are vertically superposed so as to minimise the energy transmitted upward and downward, said two antennae being separated by a distance that is substantially equal to half the average wavelength $\lambda$, thus allowing the vertical transmission of energy to be limited toward the surface or toward the bottom.

9. A method for realising an omnidirectional transmission in a horizontal plane by means of a towed linear antenna (102) of length L, constituted by a plurality of P projectors, said antenna being towed in any navigational position between the horizontal and the vertical, **characterised in that** a transmission signal is applied to each projector that comes from a common transmission signal to which a delay is applied, the value of said delay follows a non-linear rule as a function of the position of the projector in the antenna, said rule being defined automatically as a function of the speed of the carrier (101) to modify the aperture of the insonified sector as a function of the incline of the antenna relative to the vertical.

10. The method according to claim 11, wherein the non-linear rule is defined to obtain an aperture angle $\theta_{sector}$ of the transmission pattern that fulfils the following condition:

$$\theta_{sector} > \theta_{inclin} + \theta_{propa}$$

where $\theta_{inclin}$ represents the angle of incline of the antenna relative to the horizontal and $\theta_{propa}$ represents the considered direction of transmission.

**Patentansprüche**

1. Verfahren zum omnidirektionalen Senden mit einer geschleppten linearen Antenne einer Länge L, die größer ist als die Wellenlänge $\lambda$ des gesendeten Signals, gebildet von einer Mehrzahl von P Projektoren (51), **dadurch gekennzeichnet, dass** bei einem Abstand zwischen Projektoren (51) von erheblich weniger als $\lambda/2$ an jeden Projektor ein von einem gemeinsamen Sendesignal kommendes Sendesignal angelegt wird, wobei diesem gemeinsamen Signal eine Verzögerung $\tau(x)$ auferlegt wird, deren Ausdruck einem nichtlinearen Gesetz in Abhängigkeit von der Position x des Projektors in der Antenne folgt, wobei es die Anwendung dieses Gesetzes zulässt, die Winkelöffnung des Sendediagramms zu modulieren.

**2.** Verfahren nach Anspruch 1, bei dem die die Antenne bildenden Projektoren (51) im Wesentlichen abstandsgleich voneinander sind und einen Abstand voneinander haben, der wesentlich kleiner als $\lambda/2$ ist, wobei das in Abhängigkeit von der Position x des Projektors in Bezug auf die Mitte der Antenne auf das Signal angewandte Verzögerungsgesetz ein quadratisches Gesetz der folgenden Form ist:

$$\tau(x) = \alpha x^2.$$

**3.** Verfahren nach Anspruch 1, bei dem, bei einem von der Mitte zu den Enden hin abnehmenden Abstand der Projektoren (51) voneinander, der wesentlich kleiner als $\lambda/2$ ist, das in Abhängigkeit von der Position x des Projektors in Bezug auf die Mitte der Antenne auf das Signal angewandte Verzögerungsgesetz die folgende Form hat:

$$\tau(x) = \pm \frac{1}{c}[|x| + L\ln(L - |x|)].$$

**4.** Verfahren nach den Ansprüchen 1 bis 3, bei dem die auf das Signal angewandte Verzögerung $\tau'(x)$ gleich der Verzögerung $\tau(x)$ modulo einer Periode $T_0$ ist, die der Mittenfrequenz des ausgesendeten Signals entspricht, wobei die Werte $\tau'(x)$ auf Q Niveaus von $\tau_1$ bis $\tau_Q$ quantifiziert werden.

**5.** Verfahren nach den Ansprüchen 1 bis 4, bei dem die Projektoren, für die die quantifizierten Werte $\tau_i$ der Verzögerung sich um $T_0/2$ unterscheiden, vom selben Speisepaar durch einfache Umkehr der Polarität der Speiseleitungen gespeist werden, wobei die Zahl der notwendigen Speiseleitungspaare somit gleich Q/2 ist.

**6.** Verfahren nach Anspruch 1, 2, 4 oder 5, bei dem einige der mittleren Projektoren der linearen Antenne in Paare von benachbarten Projektoren gruppiert werden und die Endprojektoren in Paare von Projektoren gruppiert werden, die in Bezug auf die Mitte der Antenne symmetrisch sind, wobei die ein Paar bildenden Projektoren mit demselben Signal $\tau_i$ (52, 53) gespeist werden, wobei diese Gruppen es zulassen, entweder sektormäßig nur unter Verwendung der mittleren Projektoren oder omnidirektional unter Verwendung aller Projektoren zu senden.

**7.** Sendeantenne zum Ausführen des Verfahrens nach Anspruch 6, **dadurch gekennzeichnet, dass** sie, da jeder Projektor (51) von einem speziellen Leiterpaar (62) gespeist wird, Schaltmittel (61) umfasst, die es zulassen, die Projektoren mit einer gegebenen Zahl N von Speisesignalen (63) zu speisen, wobei die Zahl N kleiner als die Zahl P der die Antenne bildenden Projektoren ist.

**8.** Sendeantenne zum Ausführen des Verfahrens nach einem der Ansprüche 1 bis 6, **dadurch gekennzeichnet, dass** sie zwei lineare Antennen (92, 93) umfasst, die vertikal übereinander gelagert sind, um die nach oben und unten gestrahlte Energie zu minimieren, wobei die beiden Antennen um einen solchen Abstand voneinander getrennt sind, der im Wesentlichen die Hälfte der mittleren Wellenlänge $\lambda$ beträgt, so dass die vertikale Energieemission in Richtung Oberfläche oder in Richtung Boden begrenzt wird.

**9.** Verfahren zum Ausführen von omnidirektionalem Senden in einer horizontalen Ebene mittels einer geschleppten linearen Antenne (102) einer Länge L, gebildet von einer Mehrzahl von P Projektoren, wobei die Antenne in jeder Navigationsposition zwischen der Horizontalen und der Vertikalen geschleppt wird, **dadurch gekennzeichnet, dass** an jeden Projektor ein Sendesignal angelegt wird, das von einem gemeinsamen Sendesignal kommt, auf das eine Verzögerung angewendet wird, deren Wert einem nichtlinearen Gesetz in Abhängigkeit von der Position des Projektors in der Antenne folgt, wobei dieses Gesetz automatisch in Abhängigkeit von der Geschwindigkeit des Trägers (101) definiert wird, um die Öffnung des beschallten Sektors in Abhängigkeit von der Neigung der Antenne in Bezug auf die Vertikale zu modifizieren.

**10.** Verfahren nach Anspruch 11, bei dem das nichtlineare Gesetz zum Erhalten eines Öffnungswinkels $\theta_{Sektor}$ des Sendediagramms gemäß der folgenden Bedingung definiert wird:

$$\theta_{sector} > \theta_{inclin} + \theta_{propa}$$

wobei $\theta_{inclin}$ den Neigungswinkel der Antenne in Bezug auf die Horizontale und $\theta_{propa}$ die betrachtete Senderichtung repräsentiert.

Fig. 1

Retard (ms)

Numéro du projecteur

## Fig. 2

Retard (ms)   Retard (modulo $T_0$)

Numéro du projecteur

## Fig. 3

Fig. 4

Fig. 5

Fig. 6

Distribution des retards

Commande du
MODE D'EMISSION

N=8 paires
d'alimentation

EP 2 010 937 B1

Fig. 7

Fig. 8

Fig. 9

Fig. 10